# EUROPEAN PATENT SPECIFICATION

(11) **EP 3 283 384 B1**
(45) Date of publication and mention of the grant of the patent: **30.12.2020**
(21) Application number: 16780997.9
(22) Date of filing: 18.04.2016
(51) Int. Cl.: B65D 30/04, B65D 30/14, D06M 17/00, D03D 1/04

(54) **HIGH STRENGTH RIBBON-WOVEN DISPOSABLE FABRIC ARTICLES**
HOCHFESTE BANDGEWOBENE EINWEGSTOFFARTIKEL
ARTICLES EN TISSU JETABLES TISSÉS EN RUBANS DE HAUTE RÉSISTANCE

(30) Priority: 17.04.2015 US 201562148974 P
(43) Date of publication of application: 21.02.2018
(73) Proprietor: Global Strategies, Inc., Boston, Massachusetts 02109 (US)
(72) Inventor: WILLIAMS, Bruce A., Boston, Massachusetts 02109 (US)
(74) Representative: Pons Ariño, Angel
(86) International application number: PCT/US2016/028103
(87) International publication number: WO 2016/168818

(56) References cited:
- CN-A- 102 094 252
- KR-A- 20130 050 140
- US-A- 4 373 979
- US-A- 6 147 128
- US-A1- 2006 204 696
- US-A1- 2013 071 046
- US-A1- 2013 189 461
- US-A1- 2014 158 560
- US-B2- 7 510 327

## Description

### FIELD OF THE DISCLOSURE

The present disclosure is generally related to woven fabrics and containers and more particularly is related to high strength ribbon-woven disposable fabric articles.

### BACKGROUND OF THE DISCLOSURE

Disposable refuse bags have typically involved the use of 3-mil polyethylene films which are formed into bags and provided on rolls for use in the containment or collection of lightweight refuse, preferably refuse which does not have any sharp edges, points or other protuberances which could cause the bag to rip or tear. Moreover, such bags are limited in the weight of the contents to normally 20 to 25 pounds, which means that a large majority of the bag is unfilled and therefore unused.

When such bags are used on construction sites for containing items, for instance, bricks, drywall pieces, two-by-fours with or without nails protruding therefrom, slate, tree limbs, cable, masonry, shingles, insulation, pipe, wire, gravel, metal or glass shards, typically these bags fail by either stretching and rupture due to the weight of the contents within the bag when the bag is lifted, or due to the puncturing, slicing or piercing of the bag film which has very little shear resistance. In such cases the puncture or hole produced propagates rapidly to cause the contents of the bags to spill out through the rip or unintended opening of the bag.

Typically, in the past, rubberized barrels were utilized at construction sites to contain the refuse that existed at the site. However, these barrels are both expensive and are subject to theft. Moreover, the barrels themselves take up a considerable amount of space and are relatively heavy in and of themselves. The amount of rubber necessary to form such barrels causes such barrels to weigh, for instance, ten pounds when empty. Also, these barrels, due to their cost, are not throwaway items and must be stored when not in use. Though the barrels themselves may be nested to reduce the amount of storage space, when these barrels are nested they oftentimes stick to each other and are difficult to dislodge.

The result for jobsite cleanup is either to use the expensive, large barrels or to utilize polyethylene continuous film bags, both of which are unsatisfactory for the above reasons

US 2006/204696 A1 (see paragraphs [0008][0033]-[0035] and [0043]) is regarded as the closest prior art and discloses a ultra-strong, tear-resistant, puncture-resistant fabric having a high tear strength, the fabric comprising a structure formed of crossed woven flat ribbons and at least one laminate film which is laminated to the structure with a heat lamination process, whereby the at least one laminate film is heat sealed to the at least one side of the structure.

From US 2013/189461 A1 is known a fabric comprising crossed woven flat ribbons, the ribbons including recycled polyethylene terephthalate (RPET).

Ribbon-woven fabrics made from new polyethylene terephthalate (PET) have been described in U.S. Pat. No. 7,510,327, entitled "High Strength Ribbon-Woven Disposable Bag for Containing Refuse". The use of new PET has allowed for the creation of high-strength bags and fabrics which may be used for containment and disposal of construction waste, however, new PET is relatively costly compared to recycled polyethylene terephthalate (RPET). To date, RPET has not been shown to able to be suitable for use in bags, fabrics or other containers which have must withstand the rigors of containing and disposing of construction waste because RPET
has not been shown to have the strength necessary for such use due to contaminants commonly found in RPET.

Compounded with the shortcomings of conventional refuse containers identified herein is the inability for some materials to be recycled while others are recycled with great abundance. While polyethylene is used in abundance, it is not often recycled. Additionally, polyethylene is not readily biodegradable without special treatment, and therefore it accumulates in landfills. In contrast, other plastic materials are used with wide varieties in consumer products, such as food packaging, and have high recycling rates.

Thus, a heretofore unaddressed need exists in the industry to address the aforementioned deficiencies and inadequacies.

### SUMMARY OF THE DISCLOSURE

Embodiments of the present disclosure provide high-strength ribbon-woven fabrics constructed of ribbon-woven recycled polyethylene terephthalate (RPET), methods of fabricating such fabrics and disposable bags for containing refuse fabricated using such fabrics. Briefly described, in architecture, the present invention, among others, can be implemented as follows. A high-strength, tear-resistant, puncture-resistant fabric having a high tear strength includes a ribbon-woven fabric according to claim 1, having crossed woven ribbons of flat, recycled polyethylene terephthalate (RPET), wherein the RPET may be treated to be substantially free of metallic contaminants. The ribbon-woven fabric sheet may be devoid of low melting temperature bonding layers between the crossed ribbons.

The present disclosure can also be viewed as providing a creating a high-strength ribbon-woven disposable bag. Briefly described, in architecture, one embodiment of the invention, among others, may be implemented as follows. A high-strength, tear-resistant, puncture-resistant bag having a high tear strength, the bag comprising crossed woven flat ribbons, the ribbons including recycled polyethylene terephthalate (RPET), wherein the RPET is treated to be substantially free of metals. The fabric forming the bag may be devoid of low melting temperature bonding layers between the crossed ribbons. The bag may be formed in a sheet and stitched at various edges to prevent unraveling of the bag. The stitch count for the sealing end of the bag may be 100 per inch (39.4 per cm)

The present disclosure also provides a method of making a high-strength, tear-resistant, puncture-resistant fabric having a high tear strength, the method is defined in claim 6 and includes forming a sheet from melted recycled polyethylene terephthalate (RPET), wherein the RPET is purified to remove metals, and other impurities, cutting the sheet into ribbons; and weaving the ribbons into a fabric of crossed woven flat ribbons. According to embodiments, the fabric may be devoid of low melting temperature bonding layers between the crossed ribbons. The method may further include forming the fabric into a cylindrical bag having a sealed end. The method may include folding over one end of the bag and stitching the bag to form the sealed end. Also according to embodiments, the stitching may be performed using cotton thread. According to further embodiments, the method includes
laminating the fabric with at least one laminate sheet which includes and a terpolymer additive of ethylene, acrylic ester, and maleic anhydride.

Other systems, methods, features, and advantages of the present disclosure within the scope of the claims will be or will become apparent to one with skill in the art upon examination of the following drawings and detailed description.

### BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.
FIG. 1 is a diagrammatic illustration of the utilization of the subject ribbon-woven bag for containing refuse at a construction site, in accordance with a first illustrative embodiment of the present disclosure.
FIG. 2 is a diagrammatic illustration of a ribbon-woven bag, illustrating the relatively wide ribbon-woven elements, with the end of the bag being folded back upwardly and stitched to the bag to form its bottom, in accordance with an illustrative embodiment of the present disclosure.
FIG. 3 is a diagrammatic illustration of the bag of FIG. 2, provided with a laminated recycled or new polyethylene terephthalate sheet or film to provide a liquid-impervious outer layer for the bag, in accordance with an illustrative embodiment of the present disclosure.
FIG. 4 is an exploded view of a portion of the bag of FIG. 2, showing the ribbon-woven structure of the bag, in accordance with an illustrative embodiment of the present disclosure.
FIG. 5 is a diagrammatic illustration of the formation of recycled polyethylene terephthalate ribbons, which are extruded in a flat sheet and then longitudinally cut, in accordance with an illustrative embodiment of the present disclosure.
FIG. 6 is a diagrammatic illustration of a ribbon weaving machine or loom showing the utilization of recycled polyethylene terephthalate ribbons which are woven into a cylinder, in accordance with an illustrative embodiment of the present disclosure.
FIG. 7 is a diagrammatic illustration of the lamination of a recycled polyethylene terephthalate film over an already-formed cylindrical flattened bag structure, illustrating the lamination of the film to the outer surfaces of the bag and then the provision of a cooling bath, after which the structure is cut, folded over at one end, and stitched at this end, in accordance with an illustrative embodiment of the present disclosure.

### DETAILED DESCRIPTION

Rather than utilizing non-disposable barrels and rather than utilizing film bags which resist biodegradation, the subject disclosure is directed to a high strength bag suitable for carting away demolition products such as bricks, wood, nails, and glass is comprised of a woven ribbon structure in which the woven material, rather than being a cord or strand, is a ribbon of recycled polyethylene terephthalate (RPET). In many situations, 100% recycled post-consumer PET, (i.e., RPET) may be used, such as RPET from consumer regrind of beverage bottles, which may include no new or pure plastic. In other situations, RPET with at least one additive may be used. Such additives may include, but are not limited to: a bioplastic, polypropylene, a terpolymer, including a terpolymer which includes ethylene, acrylic ester and maleic anhydride, such as Lotader ® 4503.

It has been found that, when bags are constructed utilizing the woven ribbon structure, the bags will safely contain refuse weighing in excess of 125 pounds (56.7 kg) for 40-inch by 29-inch' (101.6 by 73.66 cm) bags. It has also been found that any piercing of the woven structure does not creep or otherwise travel due to the woven nature of the fabric or bag, making the fabric or bag both tear resistant and cut resistant, while at the same time providing a tear strength or modulus which is quite high and in one embodiment is 35 warp pounds or 32 filling pounds according to ASTM 5587.

While such a ribbon-woven structure does in fact stretch, it has been found that the bag does not rupture with loading so that the bag may be utilized to contain large amounts of refuse without fear of the bag breaking or failing.

In one embodiment, the fabric or bag is made by melting recycled polyethylene terephthalate pellets, extruding a web that is relatively flat, and then cutting the web longitudinally to make ribbons. These ribbons are then wound up on spools, with the spooled ribbons then feeding a loom or weaving machine such that an under/over weave is produced in which the flat ribbons are clearly visible to the naked eye. It should be noted that bioplastics or other plant-based plastics may be used along with RPET for fabricating the ribbons.

In one embodiment, the recycled polyethylene terephthalate (RPET) ribbons are approximately 2.4 to 6.0 millimeters wide, approximately millimeter thick and are woven in an over and under pattern.

While the weave can be made tight enough to prevent small objects from exiting the bag, a liquid-tight bag is provided by laminating a PET film, or an RPET film to the outer surface of the ribbon-woven bag. The PET film/RPET film is heat sealed to the web in a laminating process involving placing sheets about the exterior of the bag and laminating such sheets to one or both of the outer surfaces of the bag through a heat/temperature cycle. Thereafter the bag with the laminate may be cooled, for example in a water bath. The laminate sheet is formed from
RPET, and includes the additive ethylene, an acrylic ester, a maleic anhydride-based terpolymer.

The structure may be woven in a cylindrical form, after which the bag may be flattened. In order to manufacture each of the individual bags, the cylindrical flattened structure is severed along a transverse cut line and the bag may be folded back on itself at the cut and stitched so as to form the bottom of the bag. The stitching may be done using cotton thread, or alternatively the stitching may be done using PET, RPET or other appropriate material. The unsealed portion of the bag serves as the top or open portion of the bag.

In one example, bags of 40-inches by 29-inches (101.6 by 73.66 cm) weigh only 85 grams, which make the bags of light enough weight to be folded and packaged in a convenient manner to be opened at a jobsite where the bags will be filled. The bags are intended to be throwaway and packaged folded so that there is no problem of having to provide and store bulky containers.

Approximate ASTM ratings of the bag are set forth in the table below:

**Table 1: ASTM ratings**

| Fabric Variable | Test Result | Test Method |
|---|---|---|
| End/Inch (End/cm) | 10 (3.9) | ASTM D3775 |
| Pick/Inch (Pick/cm) | 5 (2) | ASTM D3775 |
| Fabric thickness mil (mm) | 4 (0.1) | ASTM D1777 |
| Mass/Unit Area oz/yd² (g/m²) | 2.2 (74.6) | ASTM D3776 |

| *Grab Strength* | | |
|---|---|---|
| Wrap lb. (N) | 121 (538) | ASTM D5034 |
| Filling lb. (N) | 98 (436) | ASTM D5034 |

| *Grab Elongation* | | |
|---|---|---|
| Wrap % | 20 | ASTM D5034 |
| Filling % | 20 | ASTM D5034 |

| *Trapezoid Tear Strength* | | |
|---|---|---|
| Wrap lb. (N) | 39 (173) | ASTM D5587 |
| Filling lb. (N) | 32 (142) | ASTM D5587 |
| Burst Strength psi (kPa) (as received) | 141 (972) | ASTM D3786 |
| With 16 penny nail hole | 100 | ASTM D3786 |
| With 0.25" spike hole | 80 | ASTM D3786 |

### (Samples were conditioned and tested in the Standard Atmosphere for Testing Textiles)

Due to the cut resistance, piercing resistance, tear resistance and stretch resistance of the recycled polyethylene terephthalate ribbon-woven bag, bags of the above dimensions are rated to hold upwards of 110 pounds (50 kg) or more of refuse. This means that the bags of the above dimensions may be filled to the top without fear of the bag ripping apart when the bag laden with refuse is transported from one position to another. It has been found that the bags are so tough that construction site refuse may be loaded into the bags without fear of the bags ripping or tearing due to any of the contents within the bag.

The use of recycled polyethylene terephthalate ribbons takes advantage of the physical strength of the recycled, purified polyethylene terephthalate resin when molded and cut into ribbons, with the width of the 1- to 2-millimeter-thick ribbons being variable from six millimeters down to 2.4 millimeters.

While the subject invention is described as utilizing recycled polyethylene terephthalate ribbons, other materials may be utilized for the bag in addition to the RPET, so that the bag may be ribbon-woven from a wide variety of materials, depending on the application. For example, in one non-limiting example, the refuse bags having a 4 mil thickness may be made with a mixture of RPET, titanium dioxide (TiO2) and one or more binders, for non-limiting example, a polypropylene, high density polyethylene, low density polyethylene, an ethylene acrylic ester, etc. In one example, the ratio may include 92-95% RPET with remaining amounts of TiO2 and calcium carbonate as a combined batch along with additive binder(s). As discussed above, the additive includes a terpolymer. This production may be a blown film in circular fashion which may be heat sealed at bottom, or sealed by any appropriate means, including stitching or including a liquid fluid from a pressure pump and elongated into a tube dispensing melted RPET to form a sheet. Similarly, other sealing techniques, such as sonic sealing may also be used. It should be noted that recycled polyethylene terephthalate is a relatively inexpensive material that has the above-noted ASTM properties. Further, polyethylene terephthalate is abundantly recycled from common consumer products, such as beverage bottles. The result is that an ultra-strong fabric or bag can be fabricated with ribbon-weaving techniques and can be manufactured inexpensively enough for the bag to be a one-time use bag and then thrown out.

In summary, an ultra-strong tear resistant, cut resistant, puncture resistant fabric or bag having a high shear strength or modulus is provided by weaving ribbons of flat polyethylene terephthalate sheet into a blanket or a bag. Such a bag may be formed by weaving a cylindrically shaped fabric article, cutting the fabric transversely and sealing up one end to form the bag, e.g., by stitching. The physical properties of the ribbon-woven bag easily accommodate holding refuse including bricks, wood with nails, glass and other refuse in a lightweight disposable bag. In an alternative embodiment, the ribbon-woven bag is overlain with sheets laminated to the exterior of the bag to provide a fluid-tight container.

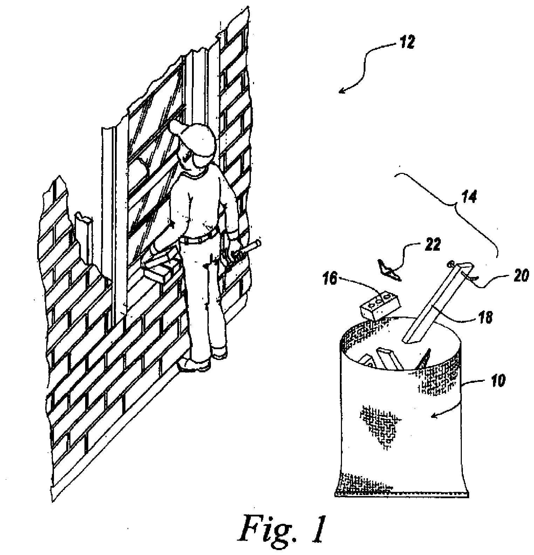

FIG. 1 is a diagrammatic illustration of the utilization of the subject ribbon-woven bag for containing refuse at a construction site, in accordance with an illustrative embodiment of the present disclosure. As is shown, a ribbon-woven bag 10 is opened at a construction site 12 so that refuse, generally indicated at 14, may be placed within the bag. The refuse may contain heavy, sharp-cornered bricks 16, wooden two-by-fours 18 having nails 20 protruding therethrough or may include shards 22 of glass, all of which is placed within the bag 10 for transport off-site.

It will be appreciated that the sharp corners of the brick 16 would ordinarily pierce a polyethylene film bag, as would the points of nail 20 or any other sharp hardware that happens to be contained within the bag. However, it has been found that with a ribbon-woven, recycled polyethylene terephthalate bag structure, all of the refuse at a typical jobsite can be contained safely within a bag formed with the ribbon weaving so that the bag can be a one-use bag which is provided folded up at the jobsite and then opened and filled. Once filled, the bag is generally capable of being lifted by its top and transported to a refuse disposal location.

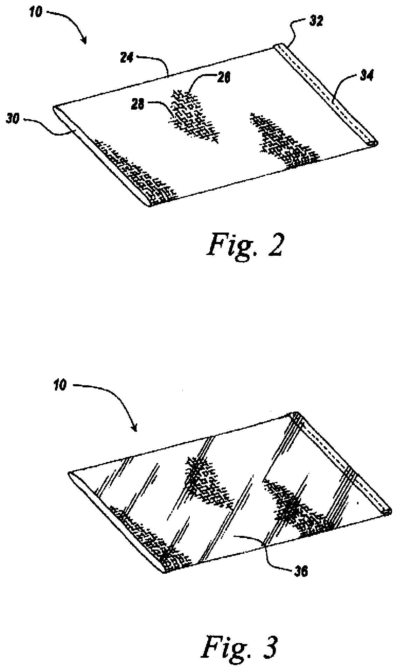

FIG. 2 is a diagrammatic illustration of a ribbon-woven bag, illustrating the relatively wide ribbon-woven elements, with the end of the bag being folded back upwardly and stitched to the bag to form its bottom, in accordance with an illustrative embodiment of the present disclosure. As is shown, the bag 10 has a side 24 comprised of woven ribbons 26 running longitudinally and ribbons 28 running laterally. Bag 10 is provided with a mouth 30 which is open, with an end 32 being folded upon itself as illustrated and sealed at the bottom of the bag via stitching 34 to complete the bag. Illustrative and approximate physical characteristics for a bag that passes the ASTM tests listed in Table I above include an 85-gram mass with 40-inch by 29-inch (101.6 by 73.66 cm) dimensions.

FIG. 3 is a diagrammatic illustration of the bag of FIG. 2, provided with a laminated sheet or film to provide a liquid-impervious layer for the bag, in accordance with the invention. As discussed above the laminate sheet is made from RPET and includes additives. Further, the sheet 2. is laminated to the outside or the inside of the bag, and further, two laminate sheets may be used on both the inner and outer surfaces of the bag. In an illustrative way to make the bag 10 liquid-impervious, the bag 10 is provided with an overlying laminated sheet or film 36, which is laminated to the outer surface of the bag when the bag is flat. It has been found that such a laminated film or sheet can be easily affixed to the ribbon-woven RPET on the outside such that it will stay in place and hold most any liquid likely to be found at a construction site, within the bag. Note that the physical properties of the underlying bag prevent the bag contents from spilling out due to the weight thereof, or due to sharp protrusions or edges of the bag contents.

It will be appreciated that by placing the liquid-tight film over at least one surface of the bag, the bag itself provides for the load-bearing structure, with the outer film containing liquids in the bag.

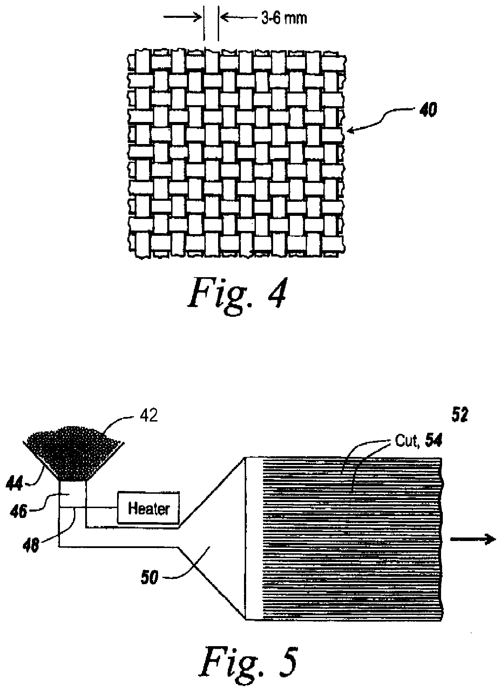

FIG. 4 is an exploded view of a portion of the bag of FIG. 2, showing the ribbon-woven structure of the bag, in accordance with an illustrative embodiment of the present disclosure. As is shown, a portion 40 of the ribbon weave used with the bags of FIGS. 2 and 3 may have a ribbon width between 2.4 and six millimeters. It will be appreciated that the tighter the weave, i.e., the less wide the ribbon, the greater will be the physical strength characteristics of the bag. It has, however, been discovered by the inventors that the characteristics shown in the ASTM Table I, above, can be achieved through the utilization of six-millimeter-wide ribbons. The utilization of the wider ribbons means that less weaving is involved and therefore the bag may be made lighter than a similarly dimensioned bag with a tighter weave. Further, the production time for bags with wider ribbons is relatively less than that for bags with narrower ribbons.

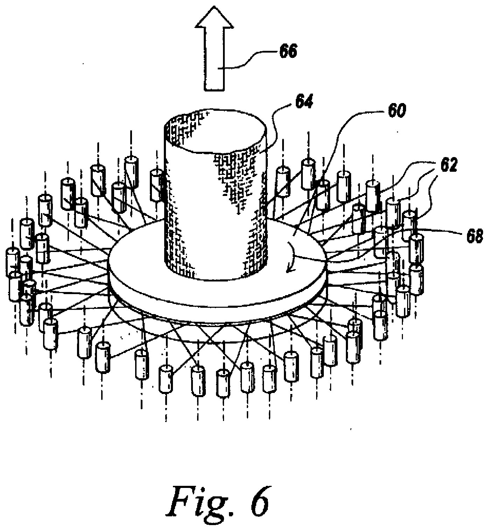

FIG. 5 is a diagrammatic illustration of the formation of RPET ribbons, which are extruded in a flat sheet and then longitudinally cut, in accordance with inventive aspects of the present disclosure. In one embodiment, the ribbons are made by placing purified, recycled polyethylene terephthalate pellets 42 in a hopper 44 having an exit throat 46 which is heated at 48 to liquefy the RPET pellets. The resultant liquid plastic is forced through a nozzle 50 which provides a flat sheet 52 of RPET. The sheet may then be skived or slit as illustrated by cuts 54 in a longitudinal direction to form separate ribbons of RPET. The ribbons may then be spooled and provided to a loom or weaving machine such as that shown in FIG. 6.

FIG. 6 is a diagrammatic illustration of a ribbon weaving machine or loom showing the utilization of polyethylene terephthalate ribbons which are woven into a cylinder, in accordance with the first exemplary embodiment of the present disclosure. As shown in FIG. 6, the weaving machine may be one available from Barmag, for example, one of Models FB1200-FB2000. The weaving machine may include a rotatable slotted capstan containing ribbon carriers which takes ribbon from rolls 62 spaced about the periphery of the capstan. The resultant cylindrical weave 64 exits upwardly as illustrated by arrow 66, with the capstan 60 rotating as illustrated by arrow 68. The result is the subject ribbon-woven cylindrical bag structure, which is processed by cutting and end sealing (e.g., stitching) to form individual bags.

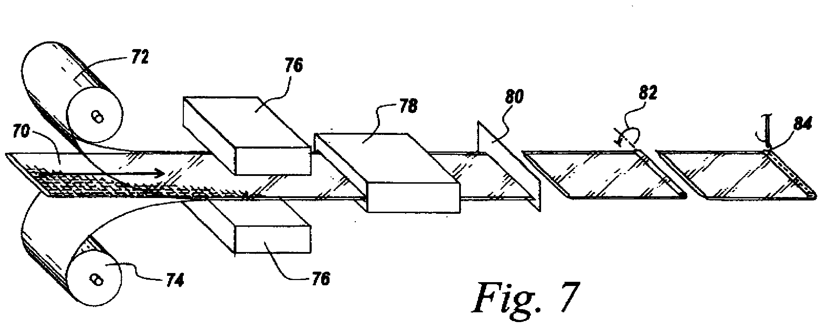

FIG. 7 is a diagrammatic illustration of the lamination of a RPET-based sheet over an already-formed, cylindrical flattened bag structure, illustrating the lamination of the film to the outer surfaces of the bag and then the provision of a cooling bath, after which the structure is cut, folded over at one end, and stitched at this end, in accordance with an illustrative embodiment of the present disclosure. As is shown, the cylindrical ribbon-woven structure 70 may be passed between two rollers 72 and 74, each containing a film of RPET (with additive) including, but not limited to a high density polyethylene, or a low density polyethylene that is applied by heated platens 76 to either side of the flattened cylindrical bag structure. After heating the RPET film for lamination purposes for a period of time controlled by the length of the heating platen and the speed with which the bag is drawn through the platens, the bag may then be subjected to a cooling bath 78 at which point the flattened cylindrical bag structure with laminates on top and bottom may be cut, as illustrated at 80. The cut bag may be folded over at one end as illustrated at 82 and stitched at 84 so as to complete the bag. Laminating is performed by any appropriate device, for non-limiting example, using a Starlinger Model 20 laminating machine, or similar machine.

The present disclosure is also directed to a high-strength ribbon-woven disposable blanket and method of fabrication. The blanket may be constructed from the same materials and largely using the same process as described relative to FIGS. 1-7. For example, the high-strength, tear-resistant, puncture-resistant blanket having a high tear strength is constructed from crossed woven ribbons of flat RPET. The blanket may be devoid of low melting temperature bonding layers between the crossed ribbons. The blanket may be formed in a sheet or 'blank' and sealed, for example by stitching, at various edges to prevent unraveling. The blank may be formed at any size and be cut to a specified size, such as one required in a particular application for the blank. The stitch count for the blanket may be about 80 by 80 per inch (80 per inch) (31.5 by 31.5 per cm (31.5 per cm)) about 100 by 100 per inch (100 per inch) (39.4 by 39.4 per cm (39.4 per cm)) about 120, by 120 per inch (120 per inch) (47.2 by 47.2 per cm (47.2 per cm)) or other appropriate stitch count. In terms of manufacturing, the blank may be constructed in large fabric sheets and not in a circular or tubular design according to aspects of the invention.

In either bag form or blanket form, the product may be used for a variety of purposes. These include trash compactor waste bags, tarpaulins, bulk bags, such as FIBC bags, pallet covers, lumber wrap, house/commercial installation bags as outside coverage, house wrap as labor barrier, or other items which may have similar uses or used under similar conditions.

It should be emphasized that the above-described embodiments of the present disclosure, particularly, any "preferred" embodiments, are merely possible examples of implementations, merely set forth for a clear understanding of the principles of the disclosure.

## Claims

1. An ultra-strong, tear-resistant, puncture-resistant fabric having a high tear strength, the fabric comprising:
a structure (70) formed of crossed woven flat ribbons (26, 28), the ribbons including recycled polyethylene terephthalate (RPET); and
at least one laminate film formed from RPET and at least one additive, wherein the at least one additive comprises ethylene, acrylic ester, and maleic anhydride terpolymer, and wherein the at least one laminate film is laminated to the structure with a heat lamination process, whereby the at least one laminate film is heat sealed to at least one side of the structure.

2. The fabric of claim 1, wherein the RPET is purified to be substantially free of metals.

3. The fabric of claim 1, wherein the fabric is devoid of bonding layers between the crossed ribbons.

4. A bag formed from the fabric of claim 1, wherein the fabric is cylindrical and has a sealed end to form the bag (10).

5. The bag of claim 4, wherein the bag (10) is stitched at the sealed end.

6. The bag of claim 4, wherein the bag (10) is sealed by stitching with cotton thread.

7. Method of making an ultra-strong, tear-resistant, puncture-resistant fabric having a high tear strength, comprising:
forming a sheet from melted recycled polyethylene terephthalate (RPET), wherein the RPET is purified to remove metals;
cutting the sheet into ribbons (26, 28);
weaving the ribbons into a woven structure (70), the woven structure comprising: crossed woven flat ribbons devoid of low melting temperature bonding layers between the crossed ribbons; and
laminating at least one laminate film to the woven structure (70) with heat laminating process, whereby the at least one laminate film is heat sealed to the at least one side of the structure, wherein the at least one laminate film is formed from RPET and at least one additive, wherein the at least one additive comprises ethylene, acrylic ester, and maleic anhydride terpolymer.

8. The method of claim 7, further comprising:
forming the fabric into a cylindrical bag (10) having a sealed end; and
folding over one end of the bag and stitching the bag to form the sealed end.

9. The method of claim 8, wherein the stitching is performed using cotton thread.

## Patentansprüche

1. Ultrastarker, reißfester, durchstichfester Stoff mit einer hohen Reißfestigkeit, wobei der Stoff umfasst:
eine Struktur (70), die aus gekreuzten gewebten flachen Bändern (26, 28) gebildet ist, wobei die Bänder recyceltes Polyethylenterephthalat (RPET) einschließen; und
mindestens einen Laminatfilm, der aus RPET und mindestens einem Additiv gebildet ist, wobei das mindestens eine Additiv Ethylen, Acrylester und Maleinsäureanhydrid-Terpolymer umfasst und wobei der mindestens eine Laminatfilm mit einem Wärmelaminierungsprozess auf die Struktur laminiert wird; wobei der mindestens eine Laminatfilm an mindestens einer Seite der Struktur heißversiegelt ist.

2. Stoff nach Anspruch 1, wobei das RPET gereinigt ist, um im Wesentlichen frei von Metallen zu sein.

3. Stoff nach Anspruch 1, wobei der Stoff keine Bindungsschichten zwischen den gekreuzten Bändern aufweist.

4. Beutel, der aus dem Stoff nach Anspruch 1 gebildet ist, Wobei der Stoff zylindrisch ist und ein versiegeltes Ende aufweist, um den Beutel (10) zu bilden.

5. Beutel nach Anspruch 4, wobei der Beutel i (10) am versiegelten Ende vernäht ist.

6. Beutel nach Anspruch 4, wobei der Beutel i (10) durch Vernähen mit Baumwollfaden versiegelt ist.

7. Verfahren zum Herstellen eines ultrastarken, reißfesten, durchstichfesten Stoffs mit einer hohen Reißfestigkeit, umfassend:
Bilden eines Flächengebildes aus geschmolzenem recyceltem Polyethylenterephthalat (RPET), wobei das RPET gereinigt wird, um Metalle zu entfernen;
Schneiden des Flächengebildes in Bänder (26, 28);
Weben der Bänder zu einer gewebten Struktur (70), wobei die gewebte Struktur umfasst: gekreuzte gewebte flache Bänder ohne Bindungsschichten mit niedriger Schmelztemperatur zwischen den gekreuzten Bändern; und
Laminieren mindestens eines Laminatfilms auf die gewebte Struktur (70) mit einem Wärmelaminierungsprozess, wobei der mindestens eine Laminatfilm an der mindestens einen Seite der Struktur heißversiegelt wird, wobei der mindestens eine Laminatfilm aus RPET und mindestens einem Additiv bildet wird, wobei das mindestens eine Additiv Ethylen, Acrylester und Maleinsäureanhydrid-Terpolymer umfasst.

8. Verfahren nach Anspruch 7, ferner umfassend:
Bilden des Stoffs zu einem zylindrischen Beutel (10) mit einem versiegelten Ende; und
Umfalten eines Endes des Beutels und Vernähen des Beutels, um das versiegelte Ende zu bilden.

9. Verfahren nach Anspruch 8, wobei das Vernähen unter Verwendung eines Baumwollfadens durchgeführt wird.

## Revendications

1. Tissu ultra robuste, résistant aux déchirures, résistant à la perforation ayant une robustesse élevée à la déchirure, le tissu comprenant :
une structure (70) formée de rubans plats tissés croisés (26, 28), les rubans comportant du polyéthylène téréphtalate recyclé (RPET) ; et
au moins un film stratifié formé de RPET et d'au moins un additif, dans lequel l'au moins un additif comprend de l'éthylène, de l'ester acrylique, et du terpolymère d'anhydride maléique, et dans lequel l'au moins un film stratifié est stratifié sur la structure par un processus de stratification thermique, moyennant quoi l'au moins un film stratifié est thermosoudé sur au moins un côté de la structure.

2. Tissu selon la revendication 1, dans lequel le RPET est purifié pour être sensiblement exempt de métaux.

3. Tissu selon la revendication 1, dans lequel le tissu est dépourvu de couches de liaison entre les rubans croisés.

4. Sac formé à partir du tissu selon la revendication 1, dans lequel le tissu est cylindrique et a une extrémité scellée pour former le sac (10).

5. Sac selon la revendication 4, dans lequel le sac i (10) est cousu à l'extrémité scellée.

6. Sac selon la revendication 4, dans lequel le sac i (10) est scellé par couture avec du fil de coton.

7. Procédé de fabrication d'un tissu ultra robuste, résistant aux déchirures, résistant à la perforation ayant une robustesse élevée à la déchirure, comprenant :
la formation d'une feuille à partir de polyéthylène téréphtalate recyclé (RPET) fondu, dans lequel le RPET est purifié pour éliminer les métaux ;
la découpe de la feuille en rubans (26, 28) ;
le tissage des rubans en une structure tissée (70), la structure tissée comprenant : des rubans plats tissés croisés dépourvus de couches de liaison à basse température de fusion entre les rubans croisés ; et
la stratification d'au moins un film stratifié sur la structure tissée (70) avec un processus de stratification thermique, moyennant quoi l'au moins un film stratifié est thermosoudé sur l'au moins un côté de la structure, dans lequel l'au moins un film stratifié est formé de RPET et d'au moins un additif, dans lequel l'au moins un additif comprend de l'éthylène, de l'ester acrylique et du terpolymère d'anhydride maléique.

8. Procédé selon la revendication 7, comprenant en outre :
la formation du tissu en un sac cylindrique (10) ayant une extrémité scellée ; et
le pliage d'une extrémité du sac et la couture du sac pour former l'extrémité scellée.

9. Procédé selon la revendication 8, dans lequel la couture est réalisée en utilisant du fil de coton.
